# EUROPÄISCHE PATENTSCHRIFT

(11) **EP 1 757 112 B1**
(45) Veröffentlichungstag und Bekanntmachung des Hinweises auf die Patenterteilung: **09.04.2008**
(21) Anmeldenummer: 05766058.1
(22) Anmeldetag: 04.06.2005
(51) Int. Cl.: H04Q 3/545, H04L 12/26

(54) **DATENÜBERTRAGUNGSEINRICHTUNG UND VERFAHREN ZUR DATENÜBERTRAGUNG MIT VERRINGERTEM AUSFALLRISIKO**
DATA TRANSMISSION DEVICE AND METHOD FOR TRANSMITTING DATA AT REDUCED FAILURE RISK
DISPOSITIF ET PROCEDE DE TRANSMISSION DE DONNEES AVEC RISQUE DE DEFAILLANCE LIMITE

(30) Priorität: 14.06.2004 DE 102004028388
(43) Veröffentlichungstag der Anmeldung: 28.02.2007
(73) Patentinhaber: Nokia Siemens Networks GmbH & Co. KG, 81541 München (DE)
(72) Erfinder: ROGASCH, Volker, 17493 Greifswald (DE)
(74) Vertreter: Fischer, Michael
(86) Internationale Anmeldenummer: PCT/EP2005/006024
(87) Internationale Veröffentlichungsnummer: WO 2005/122597

(56) Entgegenhaltungen:
- EP-A- 1 133 197
- US-A1- 2003 119 555

## Beschreibung

Die Erfindung bezieht sich auf eine Datenübertragungseinrichtung mit einer Anzahl von N Uplink-Schnittstellen, die über eine mit Datenverarbeitungskomponenten bestückte Verarbeitungslinie zu einem Ausgangselement führbar sind. Weiter bezieht sich die Erfindung auf ein Verfahren zur Übertragung von Datenverkehr, der von einer Anzahl von N Uplink-Schnittstellen über eine mit Datenverarbeitungskomponenten bestückte Verarbeitungslinie zu einem Ausgangselement geführt wird.

Für Kommunikationseinrichtungen, wie zum Beispiel Telekommunikationsnetzwerke für Sprach- und/oder Datenverkehr werden in den meisten Applikationen hohe Anforderungen an die Verfügbarkeit gestellt, um die Grundversorgung mit Telekommunikationsdienstleistungen sicher zu stellen. Im Allgemeinen wird dabei gefordert, dass Komponenten, deren Ausfall eine bestimmte Anzahl von Teilnehmern beeinträchtigt, redundant ausgeführt werden müssen. Unter derartigen Komponenten werden hierbei zum Beispiel einzelne Baugruppen und interne und externe Schnittstellen verstanden. In vielen Applikationen wird meist ein Ausfall von bis zu 64 Teilnehmern durch einen Einzelfehler akzeptiert (entsprechend GR 303). Für das Systemdesign von Kommunikationseinrichtungen bedeutet dies, dass im Besonderen zentrale Baugruppen, deren Funktion für eine hohe Anzahl von Teilnehmern verfügbar sein muss, einschliesslich ihrer externen und internen Schnittstellen redundant ausgeführt werden müssen. Aus diesem Grunde werden zentrale Baugruppen in der Regel paarweise ausgeführt, wobei eine Baugruppe aktiv ist und die andere redundante Baugruppe in einem Standby-Modus arbeitet. Dabei sind die Baugruppen dieses redundanten Paares in der Regel identisch ausgeführt.

Eine weitere Randbedingung stellt die Anforderung dar, für Kommunikationseinrichtungen, insbesondere in sogenannten Zugangsanwendungen (Access applications), eine hohe Flexibilität bezüglich des Typs der Baugruppe zu erzielen. Die Anpassung eines solchen Geräts an die jeweilige Anwendung erfolgt durch die Auswahl der Schnittstellen, wobei eine Flexibilität hinsichtlich der Bestückung und/oder der Anschlusstechnik gefordert wird. Entsprechend dem derzeitigen Stand der Technik wird deshalb bei diesen Baugruppen oft als Anschlussarten Front Access oder Rear Access gewählt.

Die im Access-Bereich verwendeten Uplink-Interfaces (Datenrichtung vom Teilnehmer zur Vermittlungszentrale) bestehen in vielen Datenübertragungsapplikationen aus parallel geführten einzelnen Schnittstellen. So besteht zum Beispiel das Sprach-Interface nach Standard V5.2 auf bis zu 16xE1 Linien (ETSI Applikationen) und das Interface GR303 aus bis zu 28xDS1 Linien (ANSI-Applikationen). Bei diesen Interfaces ist die an und für sich naheliegende Lösung einer redundanten Ausgestaltung des Interfaces selbst für einen Netzbetreiber aus Kostengründen oft inakzeptabel.
Eine auf dem Prinzip der Redundanz von Verarbeitungslinien Datenübertragungseinrichtung ist aus der Patentschrift EP 1 133 197 bekannt.

Ein technisches Problem entsteht deshalb dann, wenn die Anschlussleitungen derartiger Interfaces an einer einzelnen Baugruppe angeschlossen werden, weil somit an diesem Anschlusspunkt ein sogenannter "Single Point of Failure" entsteht. Ein Ausfall dieser Baugruppe bedeutet aber die meist nicht hinnehmbare Störung einer hohen Anzahl von Teilnehmern. In den nachfolgend beschriebenen bekannten Lösungen wird dieses Problem derzeit nicht befriedigend gelöst.

Eine dieser derzeit unbefriedigenden Lösungen sieht eine Anordnung von Steckverbindern, insbesondere für Anschlussleitungen mit erhöhten Zuverlässigkeitsanforderungen direkt am Baugruppenträger (Shelf), unabhängig von den einzelnen Baugruppen, vor. Für diese Lösungen werden spezielle mechanische Lösungen für Baugruppenträger mit integrierten Steckverbindern notwendig. Hier treten die Nachteile auf, dass erhöhte Aufwendungen für die Mechanik und rückwärtige Einsteckleiste (Backplane) des Baugruppenträgers erforderlich sind, wodurch eine uneingeschränkte Zuverlässigkeit aber trotzdem nicht sichergestellt werden kann. Weiter ist die Flexibilität einer derartigen Anordnung nur gering, was zusätzliche Kosten verursacht. Und schliesslich sind natürlich die Steckverbinder selbst ein Single Point of Failure.

Eine weitere diesbezügliche Lösung sieht separate Anschlussleitungen zur aktiven und zur nicht-aktiven Baugruppe vor. Bei Auftritt eines Fehlerfalls auf der aktiven Baugruppe wird ein externer Umschalter angeordnet, der dann von der aktiven Baugruppe auf die bis dahin inaktive Baugruppe umschaltet, welche dann fortwährend die aktive Baugruppe ist. Als externer Umschalter kann dabei ein in Reihe geschalteter Cross Connect Multiplexer mit E1/DS1-Interfaces eingesetzt werden, der jedoch nachteiligerweise wieder selbst einen single point of failure darstellt und vergleichsweise lange Umschaltzeiten aufweist.

Alternativ wäre es auch möglich, den Umschalter in das Gerät zu integrieren, wobei der Umschalter dann auf einer separaten Baugruppe (mit hoher Zuverlässigkeit) angeordnet wird. Auch diese Lösung beseitigt jedoch nicht das Problem des single point of failure und zudem ist ein zusätzlicher Aufwand durch das zusätzliche zentrale Board erforderlich.

Abhilfe kann hier nun eine Lösung mit sogenanntem Load-Sharing (Lastaufteilung) sein, bei dem eine Aufteilung der Anschlussleitungen auf zwei Baugruppen und der parallele Betrieb beider Baugruppen vorgesehen wird, wobei jede Baugruppe mit reduzierter Last betrieben wird. Wiederum nachteilig bei dieser Lösung ist es, dass bei dem Ausfall einer Baugruppe die Performance stark reduziert wird und ein hoher Software-Aufwand zur Administration des Load-Sharings erforderlich ist.

Der Erfindung liegt daher die Aufgabe zugrunde, eine Datenübertragungseinrichtung und ein Verfahren zur Datenübertragung anzugeben, bei denen eine hohe Verfügbarkeit der Interkonnektion für die Anschlussleitungen bei vergleichsweise geringem administrativen und geräteseitigem Aufwand gegeben ist.

Diese Aufgabe wird bezüglich der Datenübertragungseinrichtung der eingangs genannten Art erfindungsgemäss dadurch gelöst, dass eine Datenübertragungseinrichtung mit einer Anzahl von N Uplink-Schnittstellen, die über eine mit Datenverarbeitungskomponenten bestückte Verarbeitungslinie zu einem Ausgangselement führbar sind, vorgesehen ist, bei der eine erste Verarbeitungslinie und eine zweite Verarbeitungslinie vorgesehen sind, die jeweils zwei separate Verarbeitungsreihen für jeweils N/2 Datenlinien aufweisen, wobei an der ersten Verarbeitungslinie eine erste Hälfte der N Uplink-Schnittstellen angeschlossen ist und an der zweiten Verarbeitungslinie die zweite Hälfte der N Uplink-Schnittstellen angeschlossen ist, und wobei jede Verarbeitungslinie eine Schaltungsanordnung aufweist, mittels deren die an der Verarbeitungslinie angeschlossenen N/2 Datenlinien auf die jeweils andere Verarbeitungslinie an eine der beiden dort verfügbaren Verarbeitungsreihen anschliessbar sind, und wobei die Schaltungsanordnungen so gesteuert sind, dass eine der beiden Verarbeitungslinien aktiv und die jeweils andere in einen Standby-Modus schaltbar ist, so dass der an den N Uplink-Schnittstellen anstehende Datenverkehr über eine der beiden Verarbeitungslinien abwickelbar ist.

Bezüglich des Verfahren zur Datenübertragung wird diese Aufgabe erfindungsgemäss dadurch gelöst, dass ein Verfahren zur Übertragung von Datenverkehr, der von einer Anzahl von N Uplink-Schnittstellen über eine mit Datenverarbeitungskomponenten bestückte Verarbeitungslinie zu einem Ausgangselement geführt wird, vorgesehen ist, bei dem eine erste Verarbeitungslinie und eine zweite Verarbeitungslinie verwendet werden, die jeweils zwei separate Verarbeitungsreihen für jeweils N/2 Datenlinien aufweisen, wobei an der ersten Verarbeitungslinie eine erste Hälfte der N Uplink-Schnittstellen angeschlossen wird und an der zweiten Verarbeitungslinie die zweite Hälfte der N Uplink-Schnittstellen angeschlossen wird, und wobei mittels einer für jede Verarbeitungslinie vorgesehenen Schaltungsanordnung die an der Verarbeitungslinie angeschlossenen N/2 Datenlinien auf die jeweils andere Verarbeitungslinie an eine der beiden dort verfügbaren Verarbeitungsreihen angeschlossen werden, und wobei die Schaltungsanordnungen so gesteuert werden, dass eine der beiden Verarbeitungslinien aktiv und die jeweils andere in einen Standby-Modus geschaltet ist, so dass der an den N Uplink-Schnittstellen anstehende Datenverkehr über eine der beiden Verarbeitungslinien abgewickelt wird.

Auf diese Weise sind die Uplink-Datenleitungen auf zwei Baugruppen verteilt angeschlossen, wobei aber die physikalische logische Verarbeitung aller Uplink-Datenleitungen auf einer der beiden Baugruppen (Verarbeitungslinie) erfolgt. Dabei können die technischen Mittel zur Weiterschaltung von jeweils N/2 Datenlinien relativ einfach und mit hoher Verfügbarkeit und weitgehend isoliert von der Hauptfunktion der Verarbeitungslinie, also beispielweise der Baugruppe, realisiert sein. Beide Verarbeitungslinien können weiter weitestgehend unabhängig arbeiten, so dass bei Störungen der Hauptfunktion der Baugruppen die Weiterschaltung der Datenlinien nicht zwangsweise von dieser Störung betroffen sind. Für die Zuverlässigkeitsaussagen braucht nicht die gesamte Baugruppe, sondern nur die zur Weiterschaltung der Uplink-Datenleitungen relevanten Komponenten betrachtet werden. Bei einem Ausfall einer Verarbeitungslinie kommt es daher nun nicht zu Einschränkungen der Performance, weil die gesamte Verarbeitung auf einer für alle Uplink-Datenleitungen ausgelegten redundanten Verarbeitungslinie erfolgt. Aus diesem Grund können auch auf die vorstehend erwähnten Softwarestrukturen, wie sie zur Realisierung eines Load-Sharings erforderlich sind, verzichtet werden.

In einer vorteilhaften Ausgestaltung der Erfindung können dann beispielsweise die E1/DS1-Anschlussleitungen 1 bis N eines Sprachdateninterfaces V5.2/GR303 bei der Einrichtung des Interfaces definiert belegt werden. So werden dann beispielsweise in bestimmten Kanälen Steuerinformationen übertragen, wobei eben aus diesem Grund eine diesbezügliche Belegung bei der Umschaltung einer Baugruppe vom aktiven in den inaktiven Zustand und umgekehrt nicht geändert werden.

Hierzu werden in Abhängigkeit vom Steckplatz die Leitungskreuzung, wie sie durch die Möglichkeit der Weiterschaltung der E1/DS1-Anschlussleitungen gegeben ist, mittels eines statischen Multiplexers aufgehoben. Ein derartiger Multiplexer kann dann zwischen dem Uplink-Interface und der eigentlichen Verarbeitungsreihe mit ihren verarbeitungskomponenten angeordnet werden.

Weitere vorteilhafte Ausgestaltungen der Erfindung können den übrigen Unteransprüchen entnommen werden.

Ausführungsbeispiele der Erfindung werden nachfolgend anhand der Zeichnung erläutert. Dabei zeigen:
- Figur 1: eine Verarbeitungseinrichtung mit einer Redundanzumschaltung auf einem separaten Board gemäss dem Stand der Technik;
- Figur 2: eine erste erfindungsgemässe Verarbeitungseinrichtung mit einer Umschaltung der E1-Interfaces mittels Relais;
- Figur 3: eine zweite erfindungsgemässe Verarbeitungseinrichtung mit einer Umschaltung der E1-Interfaces mittels Tristatezustände am LIC-Ausgang;
- Figur 4: eine dritte erfindungsgemässe Verarbeitungseinrichtung mit einer Umschaltung der E1-Interfaces mittels internem MUX/DEMUX;
- Figur 5: eine Verarbeitungseinrichtung mit einer Redundanzumschaltung mittels einem Interlink zwischen zwei Ethernet-Switches nach dem Stand der Technik; und
- Figur 6: eine vierte erfindungsgemässe Verarbeitungseinrichtung mit einer Umschaltung der Ethernet Uplink Ports mittels internem MUX/DEMUX.

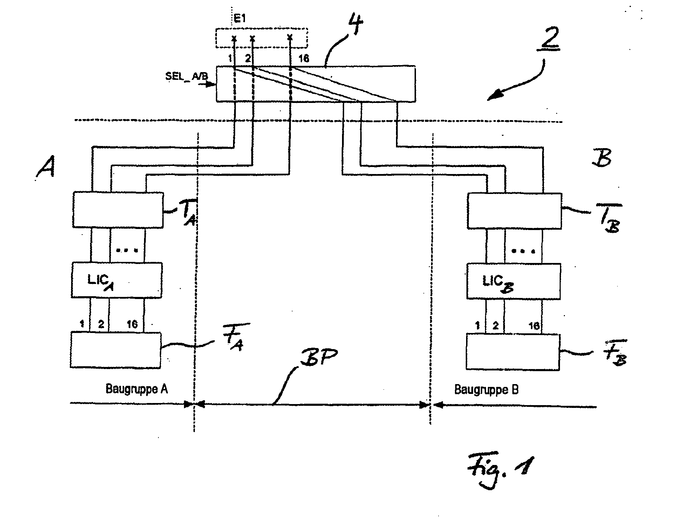

Figur 1 zeigt in schematischer Darstellung eine Verarbeitungseinrichtung 2 nach dem Stand der Technik, bei der Leitungen 1 bis N=16 eines E1/DS1-Interfaces, hier als E1 connector beschriftet, an einen gesteuerten Umschalter 4 angeschlossen sind. In Abhängigkeit von einem Steuersignal SEL_A/B werden diese Leitungen zu einer aktiven Baugruppe B geschaltet. In diesem Ausführungsbeispiel wird durch die gestrichelten Linien im Umschalter 4 angedeutet, dass die Baugruppe A im inaktiven Zustand geschaltet ist. Der Umschalter 4 kann mittels Relais ausgeführt sein, alle weiteren Funktionen werden auf der aktiven Baugruppe B ausgeführt, die hierzu einen Transformer T_{B}, eine Leitungsbaugruppe LIC_{B} (LIC = Line Interface Circuit) und als Ausgangselement einen Framer F_{B} aufweist. Bei dieser Ausführungsform stellt somit der Umschalter 4 einen single point of failure dar, was aufgabengemäss zu vermeiden ist.

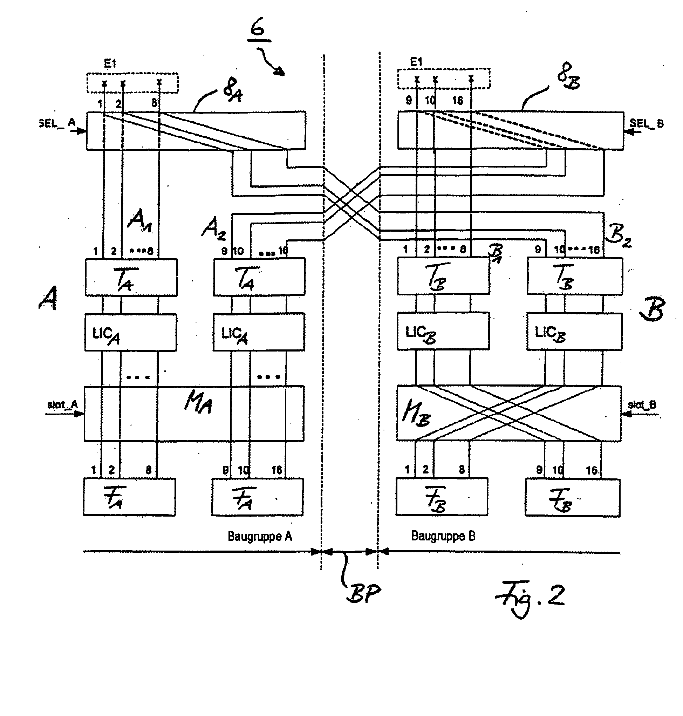

Figur 2 zeigt nun in schematischer Darstellung eine erste Verarbeitungseinrichtung 6 gemäss der vorliegenden Erfindung. Zwei Verarbeitungslinien A, B sind auf je einer Baugruppe gleichartig aufgebaut angeordnet. Eine Baugruppe, hier das Board B, arbeitet in aktivem Zustand, das andere Board A befindet sich in einem inaktiven Zustand, zum Beispiel Zustand Stand-By. An jedem Board A, B werden nur N/2, also hier acht E1-Leitungen eines V5.2 Interfaces angeschlossen. Ein Umschalter 8a bzw. 8b, ebenfalls auf der Basis von Relais, wird durch den Zustand "Aktiv/Nichtaktiv" des zugehörigen Boards A, B gesteuert und führt, wenn das zugehörige Board im Zustand Aktiv ist, zur Weiterschaltung der E1-Leitungen zur Empfangsschaltung (Vearbeitungsreihe) des eigenen Boards. Ist das betreffende Board jedoch im Zustand Inaktiv werden die N/2 E1-Leitungen über ein Backplane BP ihres hier nicht weiter dargestellten Baugruppenträgers, wie zum Beispiel eines Schaltschrankes, zum benachbarten aktiven Board weitergeleitet. Durch eine geeignete Beschaltung der Relais-Umschalter 8a, 8b kann erreicht werden, dass bei einem Stromausfall eines Boards die dort angeschlossenen E1-Leitungen zur Nachbarbaugruppe geschaltet werden. In der als Empfangsschaltung ausgestalteten Verarbeitungsreihe, umfassend den Transformer T und die Leitungsbaugruppe LIC, erfolgt die eigentlichen Signalverarbeitung nach der ITU-Norm G.703. In diesem Ausführungsbeispiel bleibt dann die Empfangsschaltung des inaktiven Boards unbeschaltet. Ein jeweils nachgeschalteter Multiplexer M wird durch ein Signal slot_A, slot_B gesteuert, welches statisch vom Steckplatz des entsprechenden aktiven Boards abgeleitet wird. Die internen Anschlüsses der Leitungsbaugruppe LICs werden direkt oder gekreuzt zu den nachgeschalteten Framern F geschaltet, in denen eine Signalverarbeitung gemäss ITU-Norm G.704 erfolgt.

Der Multiplexer M wird zum Beispiel in einer bevorzugten Ausführungsform als Teil eines FPGA (Free Programmable Gate Array) ausgeführt, wodurch eine vergleichsweise preiswerte Lösung erzielt werden kann. Mit dieser Anordnung ist es sichergestellt, dass unabhängig vom Zustand beider Boards, die Zuordnung der E1-Leitungen 1 bis N, hier N=16, des V5.2 Interfaces an den Eingängen der Framer F erhalten bleibt.

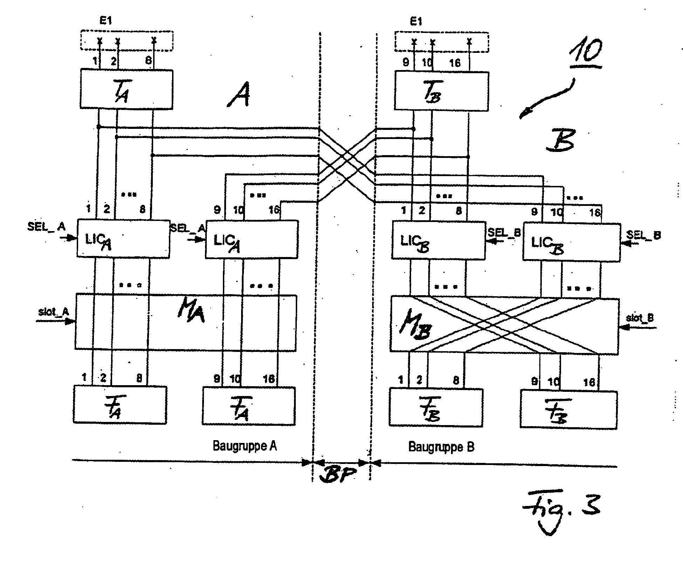

Figur 3 zeigt in schematischer Weise eine zweite Datenübertragungseinrichtung 10, bei der die in Figur 2 vorgesehenen Umschalter 8a, 8b durch eine Steuerung der Ausgänge der Leitungsbaugruppe LIC (sogenannte tristate Ausgänge) ersetzt wurden. Die Aufteilung der E1-Leitungen erfolgt wie in der vorangegangenen ersten Datenübertragungseinrichtung 6. Am E1/DS1 Interface sind die benötigten Transformer T (Übertrager) direkt den Steckverbindern der E1-Leitungen zugeordnet. Die Transformer T sind an ihrer internen Schnittstelle mit den Leitungsbaugruppen LIC beider Baugruppen A und B verbunden, wobei die Verbindung zu der jeweils benachbarten Baugruppe über die Backplane BP erfolgt. Die Leitungsbaugruppen LIC auf der aktiven Baugruppe sind mittels eines Steuersignals SEL_A, SEL_B aktivierbar; entsprechend sind die Leitungsbaugruppen LIC der inaktiven Baugruppe im Zustand Tristate und somit für den Signalweg nicht wirksam. Auch in dieser Übertragungseinrichtung 10 entspricht die Funktion der Multiplexers M der Funktion des voranstehend erläuterten Ausführungsbeispiels. Die beiden letztgenannten Ausführungsbeispiels zeichnen sich dabei im besonderen dadurch aus, dass die aktiven Komponenten redundant ausgeführt sind.

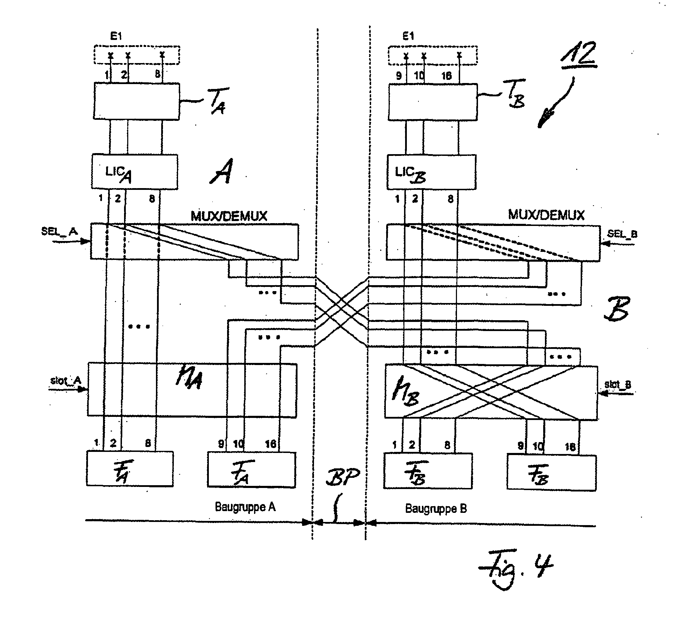

Eine dritte Datenübertragungseinrichtung 12 gemäss der Figur 4 ist als Ausführungsbeispiel gestaltet, bei dem die durch das Signal SEL_A, SEL_B gesteuerte Schaltfunktion zwischen den Leitungsbaugruppen LIC und den Multiplexern M ausgeführt wird. Die Aufteilung der E1-Leitungen erfolgt wieder wie in den beiden vorangegangenen Ausführungsbeispielen. Die vollständigen nach G.703 ausgeführten Interfaces (Transformer T und Leitungsbaugruppe LIC) sind hier direkt dem Steckverbinder zugeordnet. Am internen Interface der Leitungsbaugruppe LIC ist jeweils ein digitaler Umschalter MUX/DEMUX angeordnet, der durch das Signal SEL_A, bzw. SEL_B gesteuert ist. Die Weiterschaltung der E1-Linien erfolgt nach der Zuordnung des aktiven Zustand zu einer der beiden Baugruppen A oder B. Die Funktion des nachgeschalteten Multiplexer M entspricht wieder jener der beiden vorangegangenen Ausführungsbeispiele.

Der besondere Vorteil dieser dritten Datenübertragungseinrichtung 12 besteht in dem besonders geringen Aufwand, der zu ihrer Realisierung erforderlich ist. So können der statische Multiplexer M und der gesteuerte Umschalter MUX/DEMUX gemeinsam in einem FPGA realisiert werden. Das interne Interface zwischen diesen beiden Komponenten ist dabei unabhängig vom Leitungsinterface und kann somit frei dimensioniert werden. Im einfachsten Fall kann es aus CMOS-Leitungen bestehen.

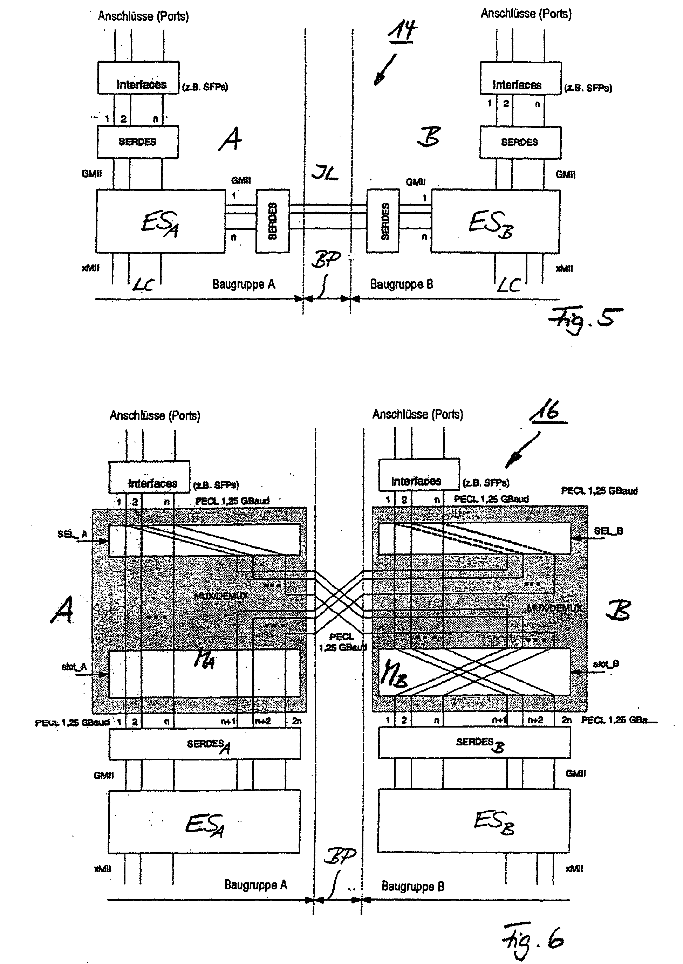

Figur 5 zeigt nun eine im Stand der Technik und mit der Ausführungsform nach Figur 1 vergleichbare Übertragungseinrichtung 14 für Ethernet-Uplink Interfaces (Ports). Dabei sind die Uplink Interfaces beider zentraler Baugruppen A und B aktiv beschaltet. Die Baugruppe im Status Standby schaltet die am Uplink determininierten Ethernet Frames vollständig über eine interne Interlink-Verbindung IL zur aktiven Baugruppe. Die Interlink-Verbindung IL zwischen beiden zentralen Baugruppen A und B werden üblicherweise als Standardschnittstellen (z.B. SERDES, GMII) ausgeführt, wobei keine zusätzlichen Anforderungen an die Auswahl des Ethernet Switchs ES gestellt werden.

Der wesentliche Nachteil dieser Übertragungseinrichtung 14 ist die komplexe Steuerung der geschalteten Verbindungen, weil zwischen zwei Betriebsarten unterschieden werden muss. Die aktive Baugruppe muss dabei den an den Uplink Ports dieser Baugruppe anstehenden und den über die Interlink-Verbindung IL determinierten Datenverkehr zu den Line Cards LC weiterschalten. Die Baugruppe im Standby-Status muss trotzdem den an ihren Uplink-Ports anstehenden Datenverkehr zu der Interlink-Verbindung IL weiterschalten. Deshalb ist eine Ausführung des Link Aggregation Protokolls für solche Uplink-Ports, die auf beiden Baugruppen A, B verteilt sind, nicht anwendbar, weil beide Ethernet-Switches ES aktiv arbeiten. Selbst ein Fehler der im Standby-Status befindlichen Baugruppe hat so direkte Auswirkungen auf die Performance am Uplink Interface. Weiter sind auch noch proprietäre Lösungen bekannt, bei denen ein proprietäres Interface hoher Bitrate zwischen benachbarten Ethernet Switches vorgesehen ist, wobei ein mehrere Komponenten umfassender virtueller Switch entsteht. Bei der Verteilung dieser Komponenten auf mehrere zueinander redundante Baugruppen kann das Link Aggregation Protokoll zur Aufteilung des Datenverkehrs bzw. zur Neuaufteilung des Datenverkehrs im Fehlerfall benutzt werden. Der wesentliche Nachteil dieser Anordnung ist die Verwendung von proprietären Interfaces und die damit verbundenen Einschränkungen beim Design von Übertragungseinrichtungen.

Figur 6 zeigt schematisch auch die Lösung für eine Übertragungseinrichtung 16 mit einer Anzahl von 2n Ethernet Ports. Genauso wie bei dem in Figur 4 dargestellten Lösungsprinzips wird auch hier ein statisch gesteuerter MUX/DEMUX auf jeder Baugruppe A, B verwendet. Nur eine der beiden Baugruppen arbeitet aktiv. Die Uplink Interfaces beider Baugruppen werden zum Ethernet Switch ES der aktiven Baugruppe geschaltet. Die Ethernet Switches ES werden gleichartig, unabhängig von ihrer Position im Shelf, belegt. Hierdurch ist eine einfache Aktualisierung der Datensätze auf der Standby-Baugruppe (Spiegelung der Datensätze der aktiven Baugruppe) und somit der einfache Wechsel von dem Standby- in den aktiven Status ermöglicht. Das Link Aggregation Protokoll kann für alle Uplink Interfaces (n auf der aktiven und n auf der Standby-Baugruppe) angewendet werden, wodurch keine proprietären Interfaces zwischen den beiden Ethernet Switches ES erforderlich sind. Eine hohe Verfügbarkeit ergibt sich so aus der vollständigen Entkopplung der Uplink-Struktur vom Ethernet Switch ES der Standby-Baugruppe. Auf diese Weise haben Fehler und/oder Upgrade-Prozesse in diesem Schaltungsbereich keinen Einfluss auf das übrige Verkehrsverhalten der Baugruppen.

In der Übertragungseinrichtung 16 ist zwischen den Uplink Interfaces (z.B. ein SFP Baustein mit optischem Interface) und dem jeweils zugeordneten SERDES ein statisch gesteuerter MUX/DEMUX angeordnet. Dieser MUX/DEMUX besteht aus einem statisch gesteuerten Umschalter, der mittels logischen Steuersignalen SEL_A bzw. SEL_B festlegt, welche der beiden Baugruppen im aktiven und im Standby-Modus arbeitet und einem Slot slot_A, slot_B gesteuerten Multiplexer M, der bei identisch ausgeführten Baugruppen eine gleichartige Belegung der Ethernet Switches ES gewährleistet. Die vom Steckplatz der Baugruppe unabhängige und identische Beschaltung der beiden Ethernet Switches ES ermöglicht auf einfache Weise die Konfigurationsdaten des aktiven Ethernet Switches zum Standby-Switch zu spiegeln.

Ein besonderes Merkmal des eingesetzten MUX/DEMUX ist seine einfache Struktur. Das Ausführungsbeispiel zeigt die erfindungsgemässe Anordnung mit geschalteten seriellen Datenlinks (PECL 1.25 GBaud), wie sie als Interface zwischen SERDES und SFP verwendet werden. Eine weitere hier nicht dargestellte Variante ist die Realisierung des gesteuerten MUX/DEMUX unter Verwendung von Dateninterfaces des Types MII/GMII/xMII. In dieser Variante ist dann der gesteuerte MUX/DEMUX direkt hinter dem Ethernet Switch ES angeordnet.

Weiterhin sich die Ethernet Switches ES beider zentralen Baugruppen über eine Double Star Structure mit den dezentralen Line Cards LC verbunden.

Auf diese Weise kann auch hier eine schnelle und einfache Umschaltung vom aktiven in den Standby-Zustand bzw. umgekehrt durch ein logisches Steuersignal und gleichartige Konfiguration von aktivem und Standby Switch erhalten werden. Damit ist auch die notwendige Funktionalität der Standby-Baugruppe zur Nutzung der dort platzierten Uplink Interfaces in vorteilhafter Weise minimiert, d.h. der Ethernet Switch ES wird insbesondere nicht mit einbezogen, woraus sich ein hohe Verfügbarkeit auch im Fehlerfall ergibt. Weiter kann das Link Aggregation Protokoll zur Laststeuerung bzw. Fehlerkompensation bei mehreren Uplink Interfaces unter Vermeidung von speziellen proprietären Lösung angewendet werden.

## Patentansprüche

1. Datenübertragungseinrichtung mit einer Anzahl von N Uplink-Schnittstellen (E1, UP), die über eine mit Datenverarbeitungskomponenten (T, LIC) bestückte Verarbeitungslinie (A, B) zu einem Ausgangselement (F) führbar sind,
bei welcher eine erste Verarbeitungslinie (A) und eine zweite Verarbeitungslinie (B) vorgesehen sind,
**dadurch gekennzeichnet, dass**
die jeweils zwei separate Verarbeitungsreihen (A₁, A₂, B₁, B₂) für jeweils N/2 Datenlinien aufweisen, wobei an der ersten Verarbeitungslinie (A) eine erste Hälfte (1 bis 8) der N Uplink-Schnittstellen (E1, UP) angeschlossen ist und an der zweiten Verarbeitungslinie (B)die zweite Hälfte (9 bis 16) der N Uplink-Schnittstellen (E1, UP) angeschlossen ist, und wobei jede Verarbeitungslinie (A, B) eine Schaltungsanordnung (8_{A}, 8_{B}) aufweist, mittels deren die an der Verarbeitungslinie (A bzw. B) angeschlossenen N/2 Datenlinien auf die jeweils andere Verarbeitungslinie (B bzw. A) an eine der beiden dort verfügbaren Verarbeitungsreihen (A₁, A₂ bzw. B₁, B₂) anschliessbar sind, und wobei die Schaltungsanordnungen (8_{A}, 8_{B}) so gesteuert sind, dass eine der beiden Verarbeitungslinien (A bzw. B) aktiv und die jeweils andere in einen Standby-Modus schaltbar ist, so dass der an den N Uplink-Schnittstellen (E1, UP) anstehende Datenverkehr über eine der beiden Verarbeitungslinien (A bzw. B) abwickelbar ist.

2. Datenverarbeitungseinrichtung nach Anspruch 1,
**dadurch gekennzeichnet, dass**
die Uplink-Schnittstellen E1-Schnittstellen, DS1-Schnittstellen oder Ethernet-Schnittstellen sind.

3. Datenverarbeitungseinrichtung nach Anspruch 1 oder 2,
**dadurch gekennzeichnet, dass**
die beiden Verarbeitungslinien (A, B) auf jeweils einem Baugruppenträger angeordnet sind.

4. Datenverarbeitungseinrichtung nach einem der Ansprüche 1 bis 3, **dadurch gekennzeichnet, dass**
die Schaltungsanordnungen (8_{A}, 8_{B}) vor den in der Verarbeitungslinie (A, B) angeordneten Datenverarbeitungskomponenten (T, LIC) angeordnet sind.

5. Datenverarbeitungseinrichtung nach einem der Ansprüche 1 bis 3, **dadurch gekennzeichnet, dass**
die in einer Verarbeitungslinie angeordneten Datenverarbeitungskomponenten in eine Anzahl von Untergruppen unterteilt sind, wobei die Schaltungsanordnungen zwischen zwei Untergruppen angeordnet sind.

6. Datenverarbeitungseinrichtung nach einem der Ansprüche 1 bis 5, **dadurch gekennzeichnet, dass**
das Ausgangselement ein Ethernet-Switch (ES) oder ein Framer (F) ist.

7. Datenverarbeitungseinrichtung nach einem der Ansprüche 1 bis 6, **dadurch gekennzeichnet, dass**
eine Leitungskreuzung, die durch die Überleitung der N/2 Datenlinien entsteht, mittels eines statischen Multiplexers (M) als Schaltungsanordnung aufhebbar ist.

8. Datenverarbeitungseinrichtung nach einem der Ansprüche 1 bis 7, **dadurch gekennzeichnet, dass**
in der Uplink-Richtung gesehen als Datenverarbeitungskomponenten der Reihe nach eine Empfangsschaltung, umfassend einen Transformer (T) und eine Leitungsbaugruppe (LIC), und einen Multiplexer (M) aufweist.

9. Datenverarbeitungseinrichtung nach Anspruch 8,
**dadurch gekennzeichnet, dass**
die Schaltungsanordnung zwischen dem Transformer (T) und der Leitungsbaugruppe (LIC) mittels der Tristatezustände am Ausgang der Leitungsbaugruppe (LIC) realisiert ist.

10. Verfahren zur Übertragung von Datenverkehr, der von einer Anzahl von N Uplink-Schnittstellen (E1, UP) über eine mit Datenverarbeitungskomponenten (T, LIC) bestückte Verarbeitungslinie (A, B) zu einem Ausgangselement (F, ES) geführt wird,
demgemäss eine erste Verarbeitungslinie (A) und eine zweite Verarbeitungslinie (B) verwendet werden,
**dadurch gekennzeichnet, dass**
die erste Verarbeitungslinie (A) und die zweite Verarbeitungslinie (B) jeweils zwei separate Verarbeitungsreihen (A₁, A₂, B₁, B₂) für jeweils N/2 Datenlinien aufweisen, wobei an der ersten Verarbeitungslinie (A) eine erste Hälfte (1 bis 8) der N Uplink-Schnittstellen (E1, UP) angeschlossen wird und an der zweiten Verarbeitungslinie (B) die zweite Hälfte (9 bis 16) der N Uplink-Schnittstellen (E1, UP) angeschlossen wird, und wobei mittels einer für jede Verarbeitungslinie (A, B) vorgesehenen Schaltungsanordnung (8_{A}, 8_{B}) die an der Verarbeitungslinie (A, B) angeschlossenen N/2 Datenlinien auf die jeweils andere Verarbeitungslinie (A; B) an eine der beiden dort verfügbaren Verarbeitungsreihen (A₁, A₂ bzw. B₁, B₂) angeschlossen werden, und wobei die Schaltungsanordnungen (8_{A}, 8_{B}) so gesteuert werden, dass eine der beiden Verarbeitungslinien (A bzw. B) aktiv und die jeweils andere in einen Standby-Modus geschaltet ist, so dass der an den N Uplink-Schnittstellen (E1, UP) anstehende Datenverkehr über eine der beiden Verarbeitungslinien (A bzw. B) abgewickelt wird.

## Claims

1. Data transmission device having a number of N uplink interfaces (E1, UP) which can be routed to an output element (F) via a processing line (A, B) equipped with data processing components (T, LIC),
in which a first processing line (A) and a second processing line (B) are provided which respectively have two separate processing arrays (A₁, A₂, B₁, B₂) for N/2 data lines, respectively, where the first processing line (A) has a first half (1 to 8) of the N uplink interfaces (E1, UP) connected to it and the second processing line (B) has the second half (9 to 16) of the N uplink interfaces (E1, UP) connected to it, and where each processing line (A, B) has a circuit arrangement (8_{A}, 8_{B}) which can be used to connect the N/2 data lines connected to the processing line (A or B) to the other processing line (B or A) using one of the two processing arrays (A₁, A₂ or B₁, B₂) available there, and where the circuit arrangements (8_{A}, 8_{B}) are controlled such that one of the two processing lines (A or B) can be activated and the other can be switched to a standby mode, so that the data traffic waiting on the N uplink interfaces (E1, UP) can be handled by means of one of the two processing lines (A or B).

2. Data processing device according to Claim 1,
**characterized in that**
the uplink interfaces are E1 interfaces, DS1 interfaces or Ethernet interfaces.

3. Data processing device according to Claim 1 or 2,
**characterized in that**
the two processing lines (A, B) are arranged on one mounting rack each.

4. Data processing device according to one of Claims 1 to 3,
**characterized in that**
the circuit arrangements (8_{A}, 8_{B}) are arranged upstream of the data processing components (T, LIC) arranged in the processing line (A, B).

5. Data processing device according to one of Claims 1 to 3,
**characterized in that**
the data processing components arranged in a processing line are divided into a number of subgroups, with the circuit arrangements being arranged between two subgroups.

6. Data processing device according to one of Claims 1 to 5,
**characterized in that**
the output element is an Ethernet switch (ES) or a framer (F).

7. Data processing device according to one of Claims 1 to 6,
**characterized in that**
a line crossing produced by the bridging of the N/2 data lines can be abolished using a static multiplexer (M) as a circuit arrangement.

8. Data processing device according to one of Claims 1 to 7,
**characterized in that**
the data processing components it has, in order, as seen in the uplink direction, are a reception circuit, comprising a transformer (T) and a line assembly (LIC), and a multiplexer (M).

9. Data processing device according to Claim 8,
**characterized in that**
the circuit arrangement is implemented between the transformer (T) and the line assembly (LIC) by means of the tristate states at the output of the line assembly (LIC).

10. Method for transmitting data traffic which is routed from a number of N uplink interfaces (E1, UP) to an output element (F, ES) via a processing line (A, B) equipped with data processing components (T, LIC),
according to which a first processing line (A) and a second processing line (B) are used,
**characterized in that**
the first processing line (A) and the second processing line (B) respectively have two separate processing arrays (A₁, A₂, B₁, B₂) for N/2 data lines, respectively, where the first processing line (A) has a first half (1 to 8) of the N uplink interfaces (E1, UP) connected to it and the second processing line (B) has the second half (9 to 16) of the N uplink interfaces (E1, UP) connected to it, and where a circuit arrangement (8_{A}, 8_{B}) provided for each processing line (A, B) is used to connect the N/2 data lines connected to the processing line (A, B) to the other processing line (A; B) using one of the two processing arrays (A₁, A₂ or B₁, B₂) available there, and where the circuit arrangements (8_{A}, 8_{B}) are controlled such that one of the two processing lines (A or B) is activated and the other is switched to a standby mode, so that the data traffic waiting on the N uplink interfaces (E1, UP) is handled by means of one of the two processing lines (A or B).

## Revendications

1. Dispositif de transmission de données, comprenant un certain nombre N d'interfaces à voie montante (« Uplink ») (E1, UP) qui peuvent être amenées vers un élément de sortie (F) par l'intermédiaire d'une ligne de traitement (A, B) garnie de composants de traitement de données (T, LIC),
dans lequel une première ligne de traitement (A) et une seconde ligne de traitement (B) sont prévues,
**caractérisé en ce que**
les lignes de traitement (A, B) présentent respectivement deux rangées de traitement séparées (A₁, A₂, B₁, B₂) pour respectivement N/2 lignes de données, dans lequel une première moitié (1 à 8) des N interfaces à voie montante (E1, UP) est reliée à la première ligne de traitement (A) et la seconde moitié (9 à 16) des N interfaces à voie montante (E1, UP) est reliée à la seconde ligne de traitement (B), et dans lequel chaque ligne de traitement (A, B) présente une disposition de circuits (8_{A}, 8_{B}) au moyen de laquelle les N/2 lignes de données reliées à la ligne de traitement (A resp. B) peuvent être reliées respectivement sur l'autre ligne de traitement (B resp. A) à une des deux rangées de traitement (A₁, A₂ resp. B₁, B₂) y disponibles, et dans lequel les dispositions de circuits (8_{A}, 8_{B}) sont commandées de telle sorte qu'une des deux lignes de traitement (A resp. B) est active et que respectivement l'autre peut être commutée dans un mode standby de telle sorte que le trafic de données en attente sur les N interfaces à voie montante (E1, UP) peut se dérouler par l'intermédiaire d'une des deux lignes de traitement (A resp. B).

2. Dispositif de transmission de données selon la revendication 1,
**caractérisé en ce que**
les interfaces à voie montante sont des interfaces E1, des interfaces DS1 ou des interfaces Ethernet.

3. Dispositif de transmission de données selon la revendication 1 ou 2,
**caractérisé en ce que**
les deux lignes de traitement (A, B) sont agencées respectivement sur un support pour circuit intégré.

4. Dispositif de transmission de données selon l'une des revendications 1 à 3, **caractérisé en ce que**
les dispositions de circuits (8_{A}, 8_{B}) sont agencées avant les composants de traitement de données (T, LIC) agencés dans la ligne de traitement (A, B).

5. Dispositif de transmission de données selon l'une des revendications 1 à 3, **caractérisé en ce que**
les composants de traitement de données agencés dans une ligne de traitement sont répartis dans un certain nombre de sous-groupes, dans lequel les dispositions de circuits sont agencées entre deux sous-groupes.

6. Dispositif de transmission de données selon l'une des revendications 1 à 5, **caractérisé en ce que**
l'élément de sortie est un commutateur Ethernet (ES) ou un système de cadrage (« Framer ») (F).

7. Dispositif de transmission de données selon l'une des revendications 1 à 6, **caractérisé en ce que**
un croisement de lignes qui est généré par la transition des N/2 lignes de données peut être annulé au moyen d'un multiplexeur statique (M) comme disposition de circuits.

8. Dispositif de transmission de données selon l'une des revendications 1 à 7, **caractérisé en ce que**
vu dans la direction à voie montante, un circuit de réception présente l'un après l'autre un transformateur (T), un circuit intégré à lignes (LIC) et un multiplexeur (M) comme composants de traitement de données.

9. Dispositif de transmission de données selon la revendication 8,
**caractérisé en ce que**
la disposition de circuits entre le transformateur (T) et le circuit intégré à lignes (LIC) peut être réalisée au moyen des états tristables sur la sortie du circuit intégré à lignes (LIC).

10. Procédé pour la transmission d'un trafic de données qui est mené depuis un certain nombre N d'interfaces à voie montante (« Uplink ») (E1, UP) vers un élément de sortie (F, ES) par l'intermédiaire d'une ligne de traitement (A,B) garnie de composants de traitement de données (T, LIC),
selon lequel une première ligne de traitement (A) et une seconde ligne de traitement (B) sont utilisées,
**caractérisé en ce que**
la première ligne de traitement (A) et la seconde ligne de traitement (B) présentent respectivement deux rangées de traitement séparées (A₁, A₂, B₁, B₂) pour respectivement N/2 lignes de données, dans lequel une première moitié (1 à 8) des N interfaces à voie montante (E1, UP) est reliée à la première ligne de traitement (A) et la seconde moitié (9 à 16) des N interfaces à voie montante (E1, UP) est reliée à la seconde ligne de traitement (B), et dans lequel les N/2 lignes de données reliées à la ligne de traitement (A, B) sont reliées respectivement sur l'autre ligne de traitement (A ; B) à une des deux rangées de traitement (A₁, A₂ resp. B₁, B₂) y disponibles au moyen d'une disposition de circuits (8_{A}, 8_{B}) prévue pour chaque ligne de traitement (A, B) , et dans lequel les dispositions de circuits (8_{A}, 8_{B}) sont commandées de telle sorte qu'une des deux lignes de traitement (A resp. B) est active et que respectivement l'autre est commutée dans un mode standby de telle sorte que le trafic de données en attente sur les N interfaces à voie montante (E1, UP) se déroule par l'intermédiaire d'une des deux lignes de traitement (A resp. B).
